# EUROPÄISCHE PATENTSCHRIFT

(11) **EP 3 365 954 B1**
(45) Veröffentlichungstag und Bekanntmachung des Hinweises auf die Patenterteilung: **31.07.2019**
(21) Anmeldenummer: 15820845.4
(22) Anmeldetag: 21.12.2015
(51) Int. Cl.: H02J 3/36

(54) **LÄNGSSPANNUNGSQUELLE SOWIE GLEICHSTROMÜBERTRAGUNGSSYSTEM MIT LÄNGSSPANNUNGSQUELLE**
LONGITUDINAL VOLTAGE SOURCE AND DIRECT CURRENT TRANSMISSION SYSTEM WITH LONGITUDINAL VOLTAGE SOURCE
SOURCE DE TENSION LONGITUDINALE ET SYSTÈME DE TRANSMISSION DE COURANT CONTINU À SOURCE DE TENSION LONGITUDINALE

(43) Veröffentlichungstag der Anmeldung: 29.08.2018
(73) Patentinhaber: Siemens Aktiengesellschaft, 80333 München (DE)
(72) Erfinder: HOFMANN, Viktor, 95448 Bayreuth (DE); BAKRAN, Mark-Matthias, 91052 Erlangen (DE)
(86) Internationale Anmeldenummer: PCT/EP2015/080763
(87) Internationale Veröffentlichungsnummer: WO 2017/108073

(56) Entgegenhaltungen:
- BALASUBRAMANIAM S ET AL: "Control, dynamics and operation of a dual H-bridge current flow controller", 2015 IEEE ENERGY CONVERSION CONGRESS AND EXPOSITION (ECCE), IEEE, 20. September 2015 (2015-09-20), Seiten 2386-2393, XP032800932, DOI: 10.1109/ECCE.2015.7309996 [gefunden am 2015-10-27]

## Beschreibung

Die Erfindung bezieht sich auf eine schaltbare Längsspannungsquelle zum Zwischenschalten in eine erste Leitung und eine zweite Leitung und zum Einspeisen von je einer Längsspannung in jede der zwei Leitungen, wobei die Längsspannungsquelle umfasst: eine erste, vier Schalter umfassende H-Brückenschaltung, die einen ersten äußeren Ausgangsanschluss, einen zweiten äußeren Ausgangsanschluss und zwei Mittenanschlüsse aufweist, wobei die Mittenanschlüsse an einer aufgetrennten Stelle der ersten Leitung an diese anschließbar sind, eine zweite, vier Schalter umfassende H-Brückenschaltung, die einen ersten äußeren Ausgangsanschluss, einen zweiten äußeren Ausgangsanschluss und zwei Mittenanschlüsse aufweist, wobei die Mittenanschlüsse an einer aufgetrennten Stelle der zweiten Leitung an diese anschließbar sind, und einen Kondensator, dessen erster Kondensatoranschluss mit den beiden ersten Ausgangsanschlüssen der zwei H-Brückenschaltungen und dessen zweiter Kondensatoranschluss mit den beiden zweiten Ausgangsanschlüssen der zwei H-Brückenschaltungen in Verbindung steht.

Eine derartige Längsspannungsquelle ist in der Druckschrift "A current flow controller for use in HVDC-Grids" (C. Barker, R. Whitehouse, 10th IET Intern. Conference on AC and DC Power Transmission (ACDC), Seiten 1 bis 5, 2012) beschrieben. Die Längsspannungsquelle kann in elektrische Leitungen eines Gleichstromübertragungssystems hineingeschaltet werden, um diese miteinander zu koppeln und einen Leistungsfluss zwischen den Leitungen zu ermöglichen.

Der Erfindung liegt die Aufgabe zugrunde, eine besondere universell einsetzbare Längsspannungsquelle anzugeben.

Diese Aufgabe wird erfindungsgemäß durch eine Längsspannungsquelle mit den Merkmalen gemäß Patentanspruch 1 gelöst. Vorteilhafte Ausgestaltungen der erfindungsgemäßen Längsspannungsquelle sind in Unteransprüchen angegeben.

Danach ist erfindungsgemäß vorgesehen, dass zwischen dem ersten Kondensatoranschluss und dem ersten Ausgangsanschluss der ersten H-Brückenschaltung zumindest ein erstes Schaltmodul, zwischen dem ersten Kondensatoranschluss und dem ersten Ausgangsanschluss der zweiten H-Brückenschaltung zumindest ein zweites Schaltmodul, zwischen dem zweiten Kondensatoranschluss und dem zweiten Ausgangsanschluss der ersten H-Brückenschaltung zumindest ein drittes Schaltmodul und zwischen dem zweiten Kondensatoranschluss und dem zweiten Ausgangsanschluss der zweiten H-Brückenschaltung zumindest ein viertes Schaltmodul geschaltet ist.

Ein wesentlicher Vorteil der erfindungsgemäßen Längsspannungsquelle ist darin zu sehen, dass sich aufgrund der erfindungsgemäß vorgesehenen vier Schaltmodule eine vollständige elektrische Trennung der H-Brückenschaltungen voneinander erreichen lässt, wodurch in vorteilhafter Weise die Möglichkeit eines Kaskadierens bzw. Hintereinanderschaltens von Längsspannungsquellen erreicht und der Aufbau von Längsspannungsquellenkaskaden ermöglicht wird.

Ein weiterer wesentlicher Vorteil der erfindungsgemäßen Längsspannungsquelle besteht darin, dass die Komponentenzahl trotz der Möglichkeit des Kaskadierens relativ gering ist und die erfindungsgemäße Längsspannungsquelle daher vergleichsweise kostengünstig ist.

Die Erfindung bezieht sich darüber hinaus auf ein Gleichstromübertragungssystem, bei dem zumindest eine Längsspannungsquelle gemäß der Erfindung vorgesehen ist. Bezüglich der Vorteile des erfindungsgemäßen Gleichstromübertragungssystems sei auf die obigen Ausführungen im Zusammenhang mit der erfindungsgemäßen Längsspannungsquelle verwiesen.

Bezüglich der Ausgestaltung des Gleichstromübertragungssystems wird es als vorteilhaft angesehen, wenn dieses einen Abschnitt mit mindestens zwei parallel geschalteten Gleichstromleitungen aufweist, die Längsspannungsquelle mit den zwei Mittenanschlüssen der ersten H-Brückenschaltung in die erste der beiden Gleichstromleitungen geschaltet ist und den Kondensator in die erste Gleichstromleitung schalten kann, und die Längsspannungsquelle mit den zwei Mittenanschlüssen der zweiten H-Brückenschaltung in die zweite der beiden Gleichstromleitungen geschaltet ist und den Kondensator in die zweite Gleichstromleitung schalten kann.

Die Längsspannungsquelle ermöglicht vorzugsweise zumindest zwei Schaltzustände, nämlich einen ersten Schaltzustand, bei dem der durch die erste Gleichstromleitung fließende Strom durch die erste H-Brückenschaltung, das eingeschaltete erste Schaltmodul, den Kondensator und das eingeschaltete dritte Schaltmodul fließt und bei dem der durch die zweite Gleichstromleitung fließende Strom allein durch die zweite H-Brückenschaltung fließt und durch das ausgeschaltete zweite und/oder vierte Schaltmodul von dem Kondensator und der ersten H-Brückenschaltung getrennt ist, und einen zweiten Schaltzustand, bei dem der durch die zweite Gleichstromleitung fließende Strom durch die zweite H-Brückenschaltung, das eingeschaltete zweite Schaltmodul, den Kondensator und das eingeschaltete vierte Schaltmodul fließt und bei dem der durch die erste Gleichstromleitung fließende Strom allein durch die erste H-Brückenschaltung fließt und durch das ausgeschaltete erste und/oder dritte Schaltmodul von dem Kondensator und der ersten H-Brückenschaltung getrennt ist.

Besonders vorteilhaft ist es, wenn die Längsspannungsquelle noch zwei weitere Schaltzustände ermöglicht, nämlich einen dritten Schaltzustand, der dem ersten Schaltzustand entspricht mit dem Unterschied, dass die Stromflussrichtung des Stromes durch den Kondensator zu der Stromflussrichtung beim ersten Schaltzustand entgegengesetzt ist, und einen vierten Schaltzustand, der dem zweiten Schaltzustand entspricht mit dem Unterschied, dass die Stromflussrichtung des Stromes durch den Kondensator zu der Stromflussrichtung beim zweiten Schaltzustand entgegengesetzt ist.

Mit Blick auf die Bereitstellung verschiedener Spannungsstufen wird es als vorteilhaft angesehen, wenn das Gleichstromübertragungssystem eine Längsspannungsquellenkaskade aufweist, die zumindest zwei Längsspannungsquellen, wie oben beschrieben, aufweist.

Bezüglich der Verschaltung der Längsspannungsquellen innerhalb der Längsspannungsquellenkaskade wird es als vorteilhaft angesehen, wenn die zumindest zwei Längsspannungsquellen mit ihren ersten H-Brückenschaltungen eine erste H-Brückenreihenschaltung in der ersten Gleichstromleitung und mit ihren zweiten H-Brückenschaltungen eine zweite H-Brückenreihenschaltung in der zweiten Gleichstromleitung bilden.

Wird die Längsspannungsquellenkaskade in zwei parallelgeschaltete Gleichstromleitungen hineingeschaltet, so ist es vorteilhaft, wenn die zwei parallel geschalteten Gleichstromleitungen mit ihrem einen Leiterende an einem ersten Knotenpunkt unmittelbar verbunden sind und mit ihrem jeweils anderen Leiterende an einem zweiten Knotenpunkt unmittelbar verbunden sind und die Längsspannungsquellenkaskade im Bereich des ersten Knotenpunkts, zumindest dichter am ersten Knotenpunkt als am zweiten Knotenpunkt, an die zwei Gleichstromleitungen angeschlossen ist.

Mit Blick auf die auftretenden Spannungen innerhalb der Längsspannungskaskade wird es als vorteilhaft angesehen, wenn die Spannungsfestigkeit der Schaltmodule der Längsspannungsquellen der Längsspannungsquellenkaskade in Richtung von dem ersten Knotenpunkt zum zweiten Knotenpunkt - von Längsspannungsquelle zu Längsspannungsquelle - jeweils um die Sperrspannung des Kondensators der Längsspannungsquellen ansteigt. Vorzugsweise sind die Schaltmodule der Längsspannungsquellen der Längsspannungsquellenkaskade baugleich.

Insbesondere im Falle der letztgenannten Ausgestaltung ist es mit Blick auf die zu schaltenden Spannungen vorteilhaft, wenn bei den Längsspannungsquellen der Längsspannungsquellenkaskade die Anzahl der ersten, zweiten, dritten und vierten Schaltmodule - in Richtung von dem ersten Knotenpunkt zum zweiten Knotenpunkt und von Längsspannungsquelle zu Längsspannungsquelle gesehen - jeweils um ein Schaltmodul zunimmt.

Die Schaltmodule der Längsspannungsquellen sind vorzugsweise bidirektional schalt- und sperrfähig.

Besonders vorteilhaft ist es, wenn die Schaltmodule der Längsspannungsquellen der Längsspannungsquellenkaskade jeweils durch zwei invers bzw. mit entgegengesetzter Polarität in Reihe verschaltete Transistormodule, insbesondere Bipolartransistoren mit isolierter Gate-Elektrode und antiparalleler Diode, gebildet sind.

Die Erfindung bezieht sich darüber hinaus auf eine Längsspannungsquellenkaskade mit zumindest zwei Längsspannungsquellen, wie sie oben beschrieben worden sind.

Die zumindest zwei Längsspannungsquellen bilden vorzugsweise mit den Mittenanschlüssen der ersten H-Brückenschaltungen eine erste H-Brückenreihenschaltung, die in die erste Leitung schaltbar ist, und mit den Mittenanschlüssen der zweiten H-Brückenschaltungen eine zweite H-Brückenreihenschaltung, die in die zweite Leitung schaltbar ist.

Die Spannungsfestigkeit der Schaltmodule der Längsspannungsquellen der Längsspannungsquellenkaskade steigt in Kaskadenlängsrichtung - von Längsspannungsquelle zu Längsspannungsquelle - vorzugsweise jeweils um die Sperrspannung des Kondensators der Längsspannungsquellen an.

Die Erfindung wird nachfolgend anhand von Ausführungsbeispielen näher erläutert; dabei zeigen beispielhaft
- Figur 1: ein Ausführungsbeispiel für ein erfindungsgemäßes Gleichstromübertragungssystem, das mit einem Ausführungsbeispiel für eine erfindungsgemäße schaltbare Längsspannungsquelle ausgestattet ist,
- Figuren 2-9: Schaltzustände der Längsspannungsquelle gemäß Figur 1 näher im Detail,
- Figur 10: ein Ausführungsbeispiel für ein erfindungsgemäßes Gleichstromübertragungssystem, das mit einer Längsspannungsquellenkaskade ausgestattet ist,
- Figur 11: ein Ausführungsbeispiel für einen Schalter, der in den H-Brückenschaltungen der Längsspannungsquelle gemäß Figur 1 eingesetzt werden kann, und
- Figur 12: ein Ausführungsbeispiel für ein Schaltmodul, das zur elektrischen Verbindung bzw. Trennung der H-Brückenschaltungen der Längsspannungsquelle gemäß Figur 1 eingesetzt werden kann.

In den Figuren werden der Übersicht halber für identische oder vergleichbare Komponenten stets dieselben Bezugszeichen verwendet.

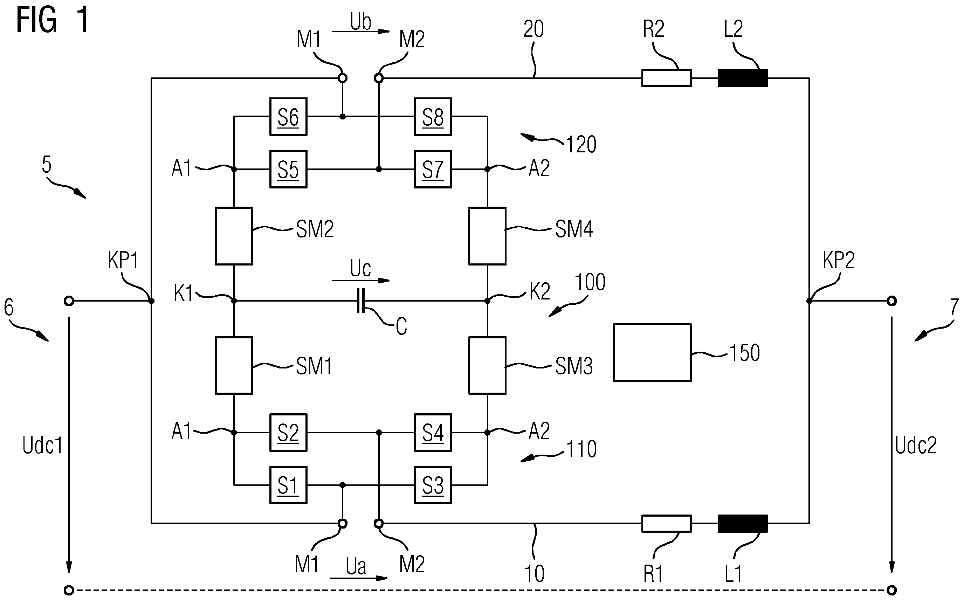

Die Figur 1 zeigt ein Gleichstromübertragungssystem 5, das ein in der Figur 1 linkes und eine Gleichspannung Udc1 führendes Gleichspannungssystem 6 mit einem in der Figur 1 rechten und eine Gleichspannung Udc2 führenden Gleichspannungssystem 7 koppelt.

Das Gleichstromübertragungssystem 5 umfasst eine erste Gleichstromleitung 10 und eine zweite Gleichstromleitung 20. Die beiden Gleichstromleitungen 10 und 20 sind parallel geschaltet und elektrisch an einem ersten Knotenpunkt KP1 und einem zweiten Knotenpunkt KP2 unmittelbar elektrisch miteinander verbunden.

Die erste Gleichstromleitung 10 weist einen ohmschen Widerstand R1 und eine Induktivität L1 und die zweite Gleichstromleitung 20 einen ohmschen Widerstand R2 und eine Induktivität L2 auf.

In die beiden Gleichstromleitungen 10 und 20 ist eine schaltbare Längsspannungsquelle 100 geschaltet, die in die erste Gleichstromleitung 10 eine Spannung Ua und in die zweite Gleichstromleitung 20 eine Spannung Ub schalten kann.

Die Längsspannungsquelle 100 weist eine erste H-Brückenschaltung 110 auf, die vier Schalter S1, S2, S3 und S4, einen ersten äußeren Ausgangsanschluss A1, einen zweiten äußeren Ausgangsanschluss A2 sowie zwei Mittenanschlüsse M1 und M2 umfasst.

Die beiden Mittenanschlüsse M1 und M2 sind an einer aufgetrennten Stelle der ersten Gleichstromleitung 10 in die Gleichstromleitung 10 geschaltet und bilden für diese Leitung Anschlussklemmen der Längsspannungsquelle 100, an denen die Spannung Ua abfällt.

Die Längsspannungsquelle 100 weist darüber hinaus eine zweite H-Brückenschaltung 120 auf, die zwei Mittenanschlüsse M1 und M2, einen ersten äußeren Ausgangsanschluss A1, einen zweiten äußeren Ausgangsanschluss A2 sowie vier Schalter S5, S6, S7 und S8 umfasst. Mit den beiden Mittenanschlüssen M1 und M2 ist die zweite H-Brückenschaltung 120 und damit die Längsspannungsquelle 100 insgesamt in die zweite Gleichstromleitung 20 geschaltet. Die beiden Mittenanschlüsse M1 und M2 der zweiten H-Brückenschaltung 120 bilden Anschlussklemmen der Längsspannungsquelle 100, an denen eine in die zweite Gleichstromleitung 20 eingespeiste Spannung Ub abfällt.

Die Längsspannungsquelle 100 weist darüber hinaus einen Kondensator C auf, an dem eine Kondensatorspannung Uc abfällt.

Ein erster Kondensatoranschluss K1 des Kondensators C steht über ein erstes Schaltmodul SM1 mit dem ersten äußeren Ausgangsanschluss A1 der ersten H-Brückenschaltung 110 und über ein zweites Schaltmodul SM2 mit dem ersten äußeren Ausgangsanschluss A1 der zweiten H-Brückenschaltung 120 in Verbindung.

Der zweite Kondensatoranschluss K2 des Kondensators C steht über ein drittes Schaltmodul SM3 mit dem zweiten äußeren Ausgangsanschluss A2 der ersten H-Brückenschaltung 110 und über ein viertes Schaltmodul SM4 mit dem zweiten äußeren Ausgangsanschluss A2 der zweiten H-Brückenschaltung 120 in Verbindung.

Je nach dem Schaltzustand der acht Schalter S1 bis S8 und der vier Schaltmodule SM1 bis SM4 kann die Kondensatorspannung Uc des Kondensators C wahlweise zwischen die zwei Mittenanschlüsse M1 und M2 der ersten H-Brückenschaltung 110 und damit in die erste Gleichstromleitung 10 oder alternativ zwischen die zwei Mittenanschlüsse M1 und M2 der zweiten H-Brückenschaltung 120 und damit in die zweite Gleichstromleitung 20 geschaltet werden. Die Ansteuerung der acht Schalter S1 bis S8 und der vier Schaltmodule SM1 bis SM4 erfolgt durch eine Steuereinrichtung 150, die mit den Schaltern und Schaltmodulen über aus Gründen der Übersicht in der Figur 1 nicht gezeigte Verbindungsleitungen in Verbindung steht.

Die Spannungen Ua und Ub, die in die erste elektrische Gleichstromleitung 10 und in die zweite Gleichstromleitung 20 eingespeist werden, sind in Abhängigkeit von den Schaltzuständen der Schalter S1 bis S8 und der Schaltmodule SM1 bis SM4 in der folgenden Tabelle aufgelistet; die letzte Spalte der Tabelle gibt die Figur an, die den jeweiligen Schaltzustand zeigt:

| S1 | S2 | S3 | S4 | S5 | S6 | S7 | S8 | SM1 | SM2 | SM3 | SM4 | Ua | Ub | Fig |
|---|---|---|---|---|---|---|---|---|---|---|---|---|---|---|
| 1 | 0 | 0 | 1 | 1 | 1 | 0 | 0 | 1 | 0 | 1 | 0 | Uc | 0 | 2 |
| 1 | 0 | 0 | 1 | 0 | 0 | 1 | 1 | 1 | 0 | 1 | 0 | Uc | 0 | 3 |
| 1 | 1 | 0 | 0 | 1 | 0 | 0 | 1 | 0 | 1 | 0 | 1 | 0 | -Uc | 4 |
| 0 | 0 | 1 | 1 | 1 | 0 | 0 | 1 | 0 | 1 | 0 | 1 | 0 | -Uc | 5 |
| 0 | 1 | 1 | 0 | 1 | 1 | 0 | 0 | 1 | 0 | 1 | 0 | -Uc | 0 | 6 |
| 0 | 1 | 1 | 0 | 0 | 0 | 1 | 1 | 1 | 0 | 1 | 0 | -Uc | 0 | 7 |
| 1 | 1 | 0 | 0 | 0 | 1 | 1 | 0 | 0 | 1 | 0 | 1 | 0 | Uc | 8 |
| 0 | 0 | 1 | 1 | 0 | 1 | 1 | 0 | 0 | 1 | 0 | 1 | 0 | Uc | 9 |

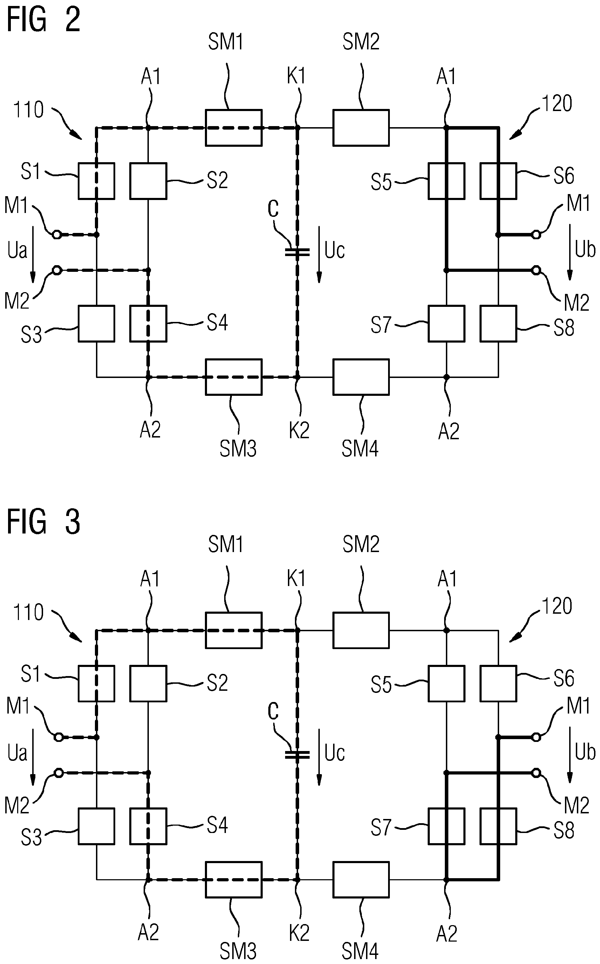

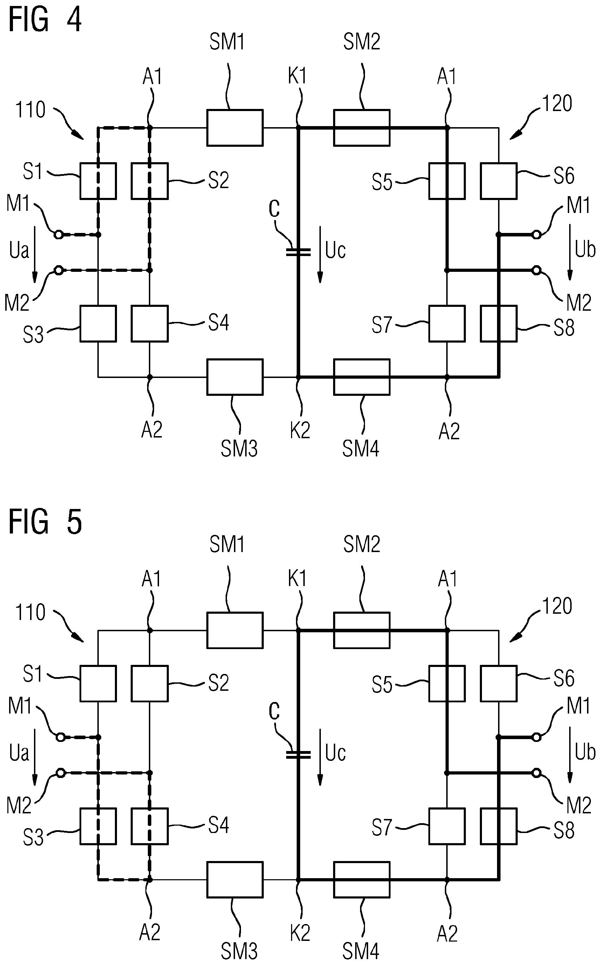

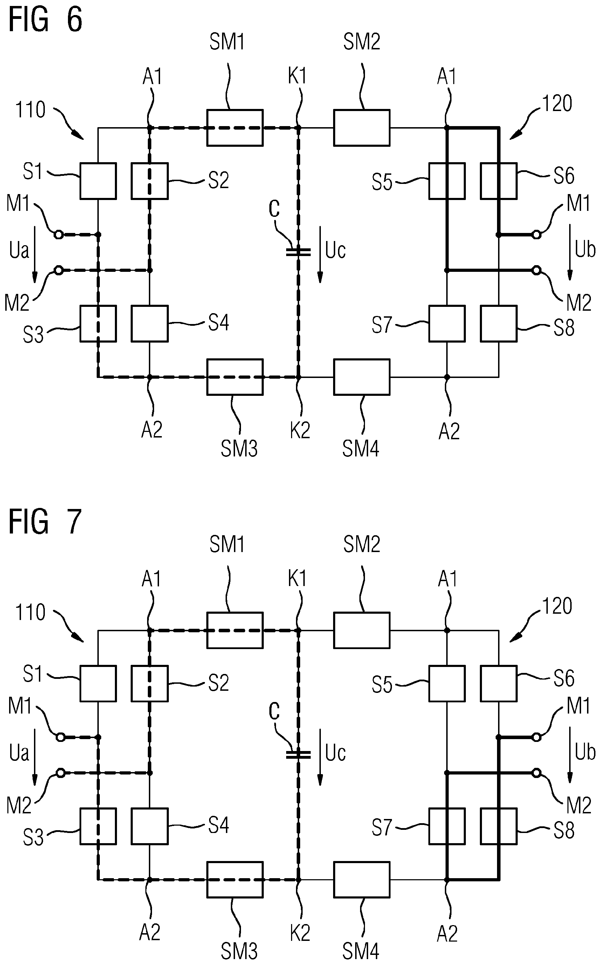

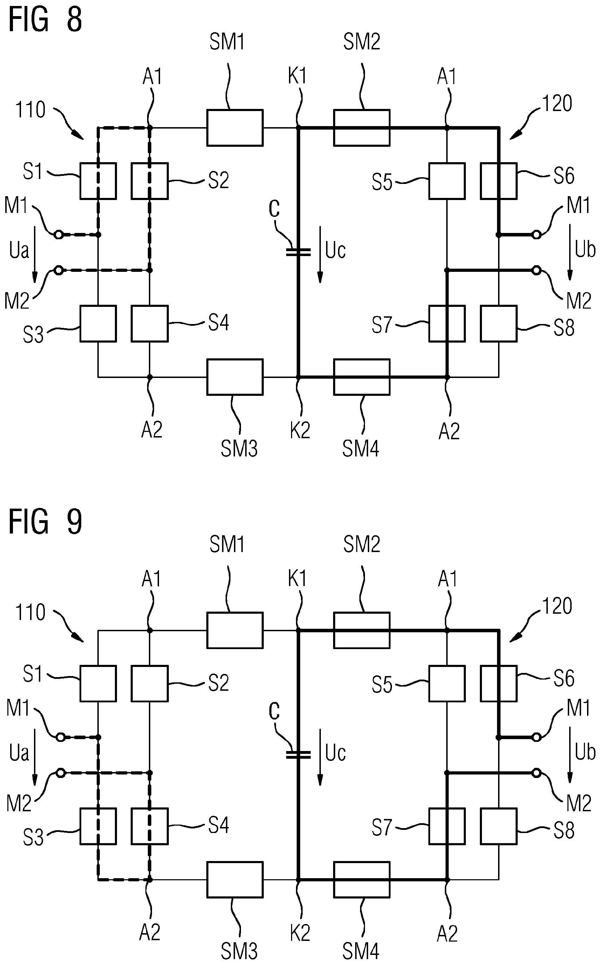

In den Figuren 2 bis 9 sind die Stromverläufe durch die Längsspannungsquelle 100 in Abhängigkeit von den Schaltzuständen markiert.

Mit der Längsspannungsquelle 100 gemäß Figur 1 lässt sich eine Lastflussregelung zwischen den beiden Gleichstromleitungen 10 und 20 realisieren, indem Gleichstromleistung aus einer der zwei Gleichstromleitungen aus- und in die jeweils andere Gleichstromleitung eingekoppelt wird. Der Leistungsaustausch zwischen den beiden Gleichstromleitungen 10 und 20 wird über den Kondensator C der Längsspannungsquelle 100 realisiert. Zur Lastflussregelung wird die in die beiden Gleichstromleitungen 10 und 20 eingekoppelte Spannung vorzugsweise zeitlich moduliert, indem jeweils zwischen den Zuständen +Uc/0 und 0/-Uc hin- und hergeschaltet wird.

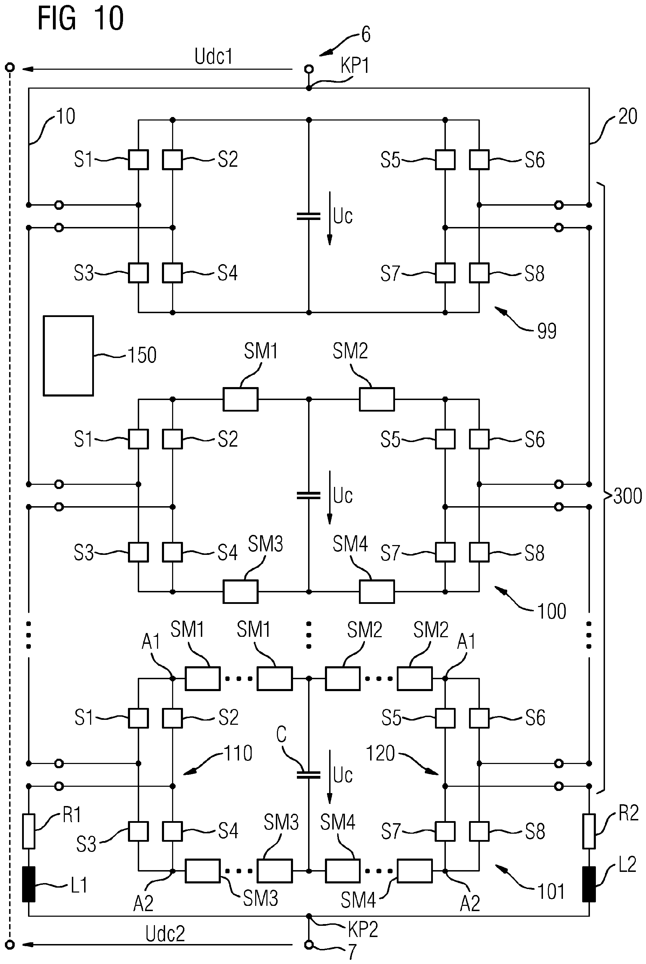

Die Figur 10 zeigt ein Ausführungsbeispiel für ein Gleichstromübertragungssystem 5, das ein in der Figur 10 oberes und eine Gleichspannung Udc1 führendes Gleichspannungssystem 6 mit einem in der Figur 10 unteren und eine Gleichspannung Udc2 führenden Gleichspannungssystem 7 koppelt.

Das Gleichstromübertragungssystem 5 umfasst eine erste Gleichstromleitung 10 und eine zweite Gleichstromleitung 20. Die beiden Gleichstromleitungen 10 und 20 sind parallel geschaltet und sind elektrisch an einem ersten Knotenpunkt KP1 und einem zweiten Knotenpunkt KP2 unmittelbar elektrisch miteinander verbunden.

Eine Längsspannungsquellenkaskade 300 des Gleichstromübertragungssystem 5 ist im Bereich eines ersten Knotenpunkts KP1 in die beiden Gleichstromleitungen 10 und 20 hineingeschaltet und ermöglicht es, in die beiden Gleichstromleitungen Spannungen einzuspeisen.

Die Längsspannungsquellenkaskade 300 umfasst eine Vielzahl an Längsspannungsquellen, von denen in der Figur 10 aus Gründen der Übersicht lediglich drei dargestellt und mit den Bezugszeichen 99, 100 und 101 gekennzeichnet sind. Die Längsspannungsquelle 100 ist mit der Längsspannungsquelle 100 gemäß Figur 1 identisch.

Die erste Längsspannungsquelle 99 der Längsspannungsquellenkaskade 300 weist - im Unterschied zu den anderen Längsspannungsquellen - keine Schaltmodule SM1 bis SM4 auf.

Bei den Längsspannungsquellen 100 und 101 der Längsspannungsquellenkaskade 300 nimmt die Anzahl der Schaltmodule SM1 bis SM4, die zwischen die äußeren Anschlüsse A1 bzw. A2 der beiden H-Brückenschaltungen 110 und 120 und den Kondensator C geschaltet sind - in Richtung von dem ersten Knotenpunkt KP1 zum zweiten Knotenpunkt KP2 gesehen, also von Längsspannungsquelle zu Längsspannungsquelle - jeweils um ein Schaltmodul zu, um den in Richtung zum zweiten Knotenpunkt KP2 ansteigenden Anforderungen an die Spannungsfestigkeit zu genügen.

Die Schaltmodule sind vorzugsweise baugleich und jeweils derart ausgebildet, dass sie jeweils die Sperrspannung des Kondensators C der Längsspannungsquellen tragen können.

Die Kondensatoren C der Längsspannungsquellen sowie die acht Schalter S1 bis S8 der Längsspannungsquellen sind vorzugsweise ebenfalls baugleich bzw. identisch.

Die Ansteuerung der Schalter und Schaltmodule der Längsspannungsquellenkaskade 300 erfolgt durch eine Steuereinrichtung 150, die mit den Schaltern und Schaltmodulen über aus Gründen der Übersicht in der Figur nicht gezeigte Verbindungsleitungen in Verbindung steht.

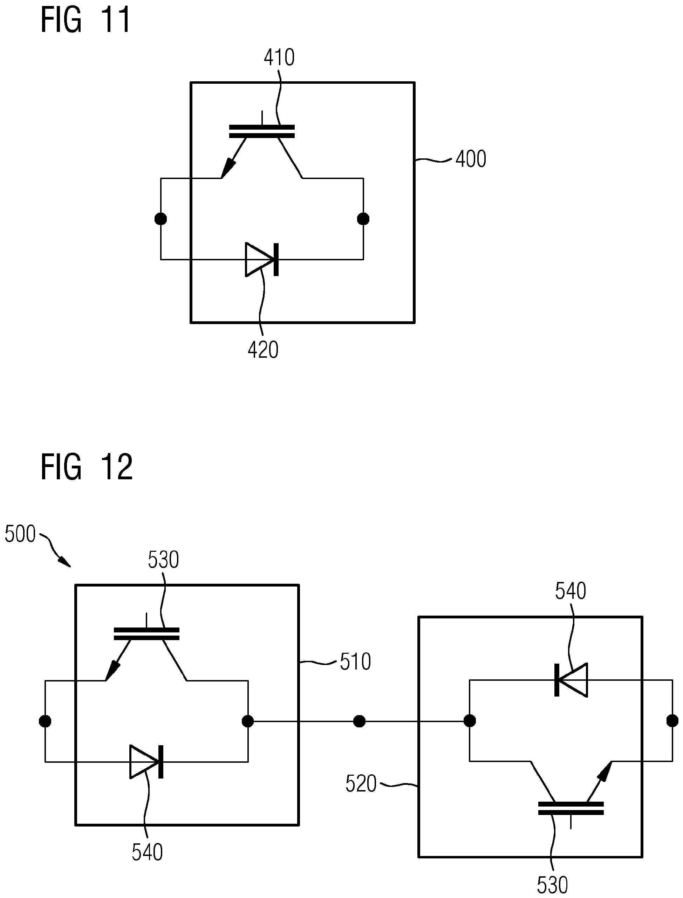

Die Figur 11 zeigt ein Ausführungsbeispiel für einen Schalter 400, der in den H-Brückenschaltungen 110 und 120 als einer der Schalter S1 bis S8 eingesetzt werden kann. Der Schalter 400 umfasst einen Bipolartransistor 410, vorzugsweise mit isolierter Gateelektrode (also einen IGBT), sowie eine dazu antiparallelgeschaltete Diode 420.

Die Figur 12 zeigt ein Ausführungsbeispiel für ein Schaltmodul 500, das als eines der Schaltmodule SM1 bis SM4 der Längsspannungsquelle 100 gemäß Figur 1 bzw. der Längsspannungsquellen 100 und 101 der Längsspannungsquellenkaskade 300 gemäß Figur 10 eingesetzt werden kann. Das Schaltmodul 500 umfasst zwei invers bzw. mit entgegengesetzter Polarität in Reihe verschaltete Transistormodule 510 und 520, die vorzugsweise jeweils einen Bipolartransistor 530, vorzugsweise mit isolierter Gateelektrode (also einen IGBT), sowie eine dazu antiparallelgeschaltete Diode 540 umfassen. Durch die in der Figur 12 gezeigte Ausgestaltung und Verschaltung der Transistormodule 510 und 520 wird in vorteilhafter Weise gewährleistet, dass das Schaltmodul 500 bidirektional schalt- und sperrfähig ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden.

### Bezugszeichenliste

- 5: Gleichstromübertragungssystem
- 6: Gleichspannungssystem
- 7: Gleichspannungssystem
- 10: erste Gleichstromleitung
- 20: zweite Gleichstromleitung
- 99: Längsspannungsquelle
- 100: Längsspannungsquelle
- 101: Längsspannungsquelle
- 110: erste H-Brückenschaltung
- 120: zweite H-Brückenschaltung
- 150: Steuereinrichtung
- 300: Längsspannungsquellenkaskade
- 400: Schalter
- 410: Bipolartransistor
- 420: Diode
- 500: Schaltmodul
- 510: Transistormodul
- 520: Transistormodul
- 530: Bipolartransistor
- 540: Diode
- A1: erster äußerer Ausgangsanschluss
- A2: zweiter äußerer Ausgangsanschluss
- C: Kondensator
- K1: erster Kondensatoranschluss
- K2: zweiter Kondensatoranschluss
- KP1: erster Knotenpunkt
- KP2: zweiter Knotenpunkt
- L1, L2: Induktivität
- M1: Mittenanschluss
- M2: Mittenanschluss
- R1,R2: ohmscher Widerstand
- S1-S8: Schalter
- SM1: erstes Schaltmodul
- SM2: zweites Schaltmodul
- SM3: drittes Schaltmodul
- SM4: viertes Schaltmodul
- Ua: Spannung
- Ub: Spannung
- Uc: Kondensatorspannung
- Udc1: Gleichspannung
- Udc2: Gleichspannung

## Patentansprüche

1. Schaltbare Längsspannungsquelle (100, 101) zum Zwischenschalten in eine erste Leitung und eine zweite Leitung und zum Einspeisen von je einer Längsspannung (Ua, Ub) in jede der zwei Leitungen, wobei die Längsspannungsquelle (100, 101) umfasst:
- eine erste, vier Schalter (S1-S4) umfassende H-Brückenschaltung (110), die einen ersten äußeren Ausgangsanschluss (A1), einen zweiten äußeren Ausgangsanschluss (A2) und zwei Mittenanschlüsse (M1, M2) aufweist, wobei die Mittenanschlüsse (M1, M2) an einer aufgetrennten Stelle der ersten Leitung an diese anschließbar sind, wobei die aufgetrennte Stelle der ersten Leitung ein erstes Leitungsende und ein zweites Leitungsende aufweist und ein erster der beiden Mittenanschlüsse (M1) an das erste Leitungsende und ein zweiter der beiden Mittenanschlüsse (M2) an das zweite Leitungsende anschließbar sind,
- eine zweite, vier Schalter (S5-S8) umfassende H-Brückenschaltung (120), die einen ersten äußeren Ausgangsanschluss (A1), einen zweiten äußeren Ausgangsanschluss (A2) und zwei Mittenanschlüsse (M1, M2) aufweist, wobei die Mittenanschlüsse (M1, M2) an einer aufgetrennten Stelle der zweiten Leitung an diese anschließbar sind, wobei die aufgetrennte Stelle der zweiten Leitung ein erstes Leitungsende und ein zweites Leitungsende aufweist und ein erster der beiden Mittenanschlüsse (M1) an das erste Leitungsende und ein zweiter der beiden Mittenanschlüsse (M2) an das zweite Leitungsende anschließbar sind, und
- einen Kondensator (C), dessen erster Kondensatoranschluss (K1) mit den beiden ersten Ausgangsanschlüssen (A1) der zwei H-Brückenschaltungen (110, 120) und dessen zweiter Kondensatoranschluss (K2) mit den beiden zweiten Ausgangsanschlüssen (A2) der zwei H-Brückenschaltungen (110, 120) in Verbindung steht,
**dadurch gekennzeichnet, dass**
- zwischen dem ersten Kondensatoranschluss (K1) und dem ersten Ausgangsanschluss (A1) der ersten H-Brückenschaltung (110) zumindest ein erstes Schaltmodul (SM1),
- zwischen dem ersten Kondensatoranschluss (K1) und dem ersten Ausgangsanschluss (A1) der zweiten H-Brückenschaltung (120) zumindest ein zweites Schaltmodul (SM2),
- zwischen dem zweiten Kondensatoranschluss (K2) und dem zweiten Ausgangsanschluss (A2) der ersten H-Brückenschaltung (110) zumindest ein drittes Schaltmodul (SM3) und
- zwischen dem zweiten Kondensatoranschluss (K2) und dem zweiten Ausgangsanschluss (A2) der zweiten H-Brückenschaltung (120) zumindest ein viertes Schaltmodul (SM4) geschaltet ist.

2. Gleichstromübertragungssystem (5),
**dadurch gekennzeichnet, dass** dieses zumindest eine Längsspannungsquelle (100, 101) nach Anspruch 1 aufweist.

3. Gleichstromübertragungssystem (5) nach Anspruch 2,
**dadurch gekennzeichnet, dass**
- das Gleichstromübertragungssystem (5) einen Abschnitt mit mindestens zwei parallel geschalteten Gleichstromleitungen (10, 20) aufweist,
- die Längsspannungsquelle (100, 101) mit den zwei Mittenanschlüssen (M1, M2) der ersten H-Brückenschaltung (110) in die erste der beiden Gleichstromleitungen (10, 20) geschaltet ist und den Kondensator (C) in die erste Gleichstromleitung (10) schalten kann, und
- die Längsspannungsquelle (100, 101) mit den zwei Mittenanschlüssen (M1, M2) der zweiten H-Brückenschaltung (120) in die zweite der beiden Gleichstromleitungen (20) geschaltet ist und den Kondensator (C) in die zweite Gleichstromleitung (20) schalten kann.

4. Gleichstromübertragungssystem (5) nach einem der voranstehenden Ansprüche 2 bis 3,
**dadurch gekennzeichnet, dass** die Längsspannungsquelle (100, 101) zumindest zwei Schaltzustände ermöglicht, nämlich
- einen ersten Schaltzustand, bei dem der durch die erste Gleichstromleitung (10) fließende Strom durch die erste H-Brückenschaltung (110), das eingeschaltete erste Schaltmodul (SM1), den Kondensator (C) und das eingeschaltete dritte Schaltmodul (SM3) fließt und bei dem der durch die zweite Gleichstromleitung (20) fließende Strom allein durch die zweite H-Brückenschaltung (120) fließt und durch das ausgeschaltete zweite und/oder vierte Schaltmodul (SM2, SM4) von dem Kondensator (C) und der ersten H-Brückenschaltung (110) getrennt ist, und
- einen zweiten Schaltzustand, bei dem der durch die zweite Gleichstromleitung (20) fließende Strom durch die zweite H-Brückenschaltung (120), das eingeschaltete zweite Schaltmodul (SM2), den Kondensator (C) und das eingeschaltete vierte Schaltmodul (SM4) fließt und bei dem der durch die erste Gleichstromleitung (10) fließende Strom allein durch die erste H-Brückenschaltung (110) fließt und durch das ausgeschaltete erste und/oder dritte Schaltmodul (SM1, SM3) von dem Kondensator (C) und der ersten H-Brückenschaltung (110) getrennt ist.

5. Gleichstromübertragungssystem (5) nach Anspruch 4,
**dadurch gekennzeichnet, dass** die Längsspannungsquelle (100, 101) zwei weitere Schaltzustände ermöglicht, nämlich
- einen dritten Schaltzustand, der dem ersten Schaltzustand entspricht mit dem Unterschied, dass die Stromflussrichtung des Stromes durch den Kondensator (C) zu der Stromflussrichtung beim ersten Schaltzustand entgegengesetzt ist, und
- einen vierten Schaltzustand, der dem zweiten Schaltzustand entspricht mit dem Unterschied, dass die Stromflussrichtung des Stromes durch den Kondensator (C) zu der Stromflussrichtung beim zweiten Schaltzustand entgegengesetzt ist.

6. Gleichstromübertragungssystem (5) nach einem der voranstehenden Ansprüche 2 bis 5,
**dadurch gekennzeichnet, dass**
- das Gleichstromübertragungssystem (5) eine Längsspannungsquellenkaskade (300) mit zumindest zwei Längsspannungsquellen (100, 101) nach Anspruch 1 aufweist,
- wobei die zumindest zwei Längsspannungsquellen (100, 101) mit ihren ersten H-Brückenschaltungen (110) eine erste H-Brückenreihenschaltung in der ersten Gleichstromleitung (10) und mit ihren zweiten H-Brückenschaltungen (120) eine zweite H-Brückenreihenschaltung in der zweiten Gleichstromleitung (20) bilden.

7. Gleichstromübertragungssystem (5) nach einem der voranstehenden Ansprüche 2 bis 6,
**dadurch gekennzeichnet, dass**
- die zwei parallel geschalteten Gleichstromleitungen (10, 20) mit ihrem einen Leiterende an einem ersten Knotenpunkt (KP1) unmittelbar verbunden sind und mit ihrem jeweils anderen Leiterende an einem zweiten Knotenpunkt (KP2) unmittelbar verbunden sind und
- die Längsspannungsquellenkaskade (300) im Bereich des ersten Knotenpunkts (KP1), zumindest dichter am ersten Knotenpunkt (KP1) als am zweiten Knotenpunkt (KP2), an die zwei Gleichstromleitungen (10, 20) angeschlossen ist.

8. Gleichstromübertragungssystem (5) nach einem der voranstehenden Ansprüche 2 bis 7,
**dadurch gekennzeichnet, dass**
die Spannungsfestigkeit der Schaltmodule (SM1-SM4) der Längsspannungsquellen (100, 101) der Längsspannungsquellenkaskade (300) in Richtung von dem ersten Knotenpunkt (KP1) zum zweiten Knotenpunkt (K2) - von Längsspannungsquelle (100, 101) zu Längsspannungsquelle (100, 101) - jeweils um die Sperrspannung des Kondensators (C) der Längsspannungsquellen (100, 101) ansteigt.

9. Gleichstromübertragungssystem (5) nach einem der voranstehenden Ansprüche 2 bis 8,
**dadurch gekennzeichnet, dass**
bei den Längsspannungsquellen (100, 101) der Längsspannungsquellenkaskade (300) die Anzahl der ersten, zweiten, dritten und vierten Schaltmodule (SM1-SM4) - in Richtung von dem ersten Knotenpunkt (KP1) zum zweiten Knotenpunkt (KP2) und von Längsspannungsquelle (100, 101) zu Längsspannungsquelle (100, 101) gesehen - jeweils um ein Schaltmodul zunimmt.

10. Gleichstromübertragungssystem (5) nach einem der voranstehenden Ansprüche 2 bis 9,
**dadurch gekennzeichnet, dass**
die Schaltmodule (SM1-SM4) der Längsspannungsquellen (100, 101) der Längsspannungsquellenkaskade (300) baugleich sind.

11. Gleichstromübertragungssystem (5) nach einem der voranstehenden Ansprüche 2 bis 10,
**dadurch gekennzeichnet, dass**
die Schaltmodule (SM1-SM4) der Längsspannungsquellen (100, 101) bidirektional schalt- und sperrfähige Halbleiterschaltmodule sind.

12. Gleichstromübertragungssystem (5) nach einem der voranstehenden Ansprüche 2 bis 11,
**dadurch gekennzeichnet, dass**
die Schaltmodule (SM1-SM4) der Längsspannungsquellen (100, 101) der Längsspannungsquellenkaskade (300) jeweils durch zwei invers bzw. mit entgegengesetzter Polarität in Reihe verschaltete Transistormodule (510, 520), insbesondere Bipolartransistoren (530) mit isolierter Gate-Elektrode und antiparalleler Diode (540), gebildet sind.

13. Längsspannungsquellenkaskade (300),
**dadurch gekennzeichnet, dass**
diese zumindest zwei Längsspannungsquellen (100, 101) nach Anspruch 1 aufweist.

14. Längsspannungsquellenkaskade (300) nach Anspruch 13,
**dadurch gekennzeichnet, dass**
die zumindest zwei Längsspannungsquellen (100, 101) mit den Mittenanschlüssen (M1, M2) der ersten H-Brückenschaltungen (110) eine erste H-Brückenreihenschaltung, die in die erste Leitung schaltbar ist, und mit den Mittenanschlüssen (M1, M2) der zweiten H-Brückenschaltungen (120) eine zweite H-Brückenreihenschaltung bilden, die in die zweite Leitung schaltbar ist.

15. Längsspannungsquellenkaskade (300) nach Anspruch 13 oder 14,
**dadurch gekennzeichnet, dass**
die Spannungsfestigkeit der Schaltmodule (SM1-SM4) der Längsspannungsquellen (100, 101) der Längsspannungsquellenkaskade (300) in Kaskadenlängsrichtung - von Längsspannungsquelle (100, 101) zu Längsspannungsquelle (100, 101) - jeweils um die Sperrspannung des Kondensators (C) der Längsspannungsquellen (100, 101) ansteigt.

## Claims

1. Switchable longitudinal voltage source (100, 101) for interconnection into a first line and a second line and for feeding in a respective longitudinal voltage (Ua, Ub) into each of the two lines, wherein the longitudinal voltage source (100, 101) comprises:
- a first H-bridge circuit (110) comprising four switches (S1-S4), said first H-bridge circuit having a first outer output terminal (A1), a second outer output terminal (A2) and two center terminals (M1, M2), wherein the center terminals (M1, M2) can be connected to the first line at a disconnected location of said first line, wherein the disconnected location of the first line has a first line end and a second line end and a first of the two centre terminals (M1) can be connected to the first line end and a second of the two centre terminals (M2) can be connected to the second line end,
- a second H-bridge circuit (120) comprising four switches (S5-S8), said second H-bridge circuit having a first outer output terminal (A1), a second outer output terminal (A2) and two center terminals (M1, M2), wherein the center terminals (M1, M2) can be connected to the second line at a disconnected location of said second line, wherein the disconnected location of the second line has a first line end and a second line end and a first of the two centre terminals (M1) can be connected to the first line end and a second of the two centre terminals (M2) can be connected to the second line end, and
- a capacitor (C), the first capacitor terminal (K1) of which is connected to the two first output terminals (A1) of the two H-bridge circuits (110, 120) and the second capacitor terminal (K2) of which is connected to the two second output terminals (A2) of the two H-bridge circuits (110, 120),
**characterized in that**
- at least one first switching module (SM1) is connected between the first capacitor terminal (K1) and the first output terminal (A1) of the first H-bridge circuit (110),
- at least one second switching module (SM2) is connected between the first capacitor terminal (K1) and the first output terminal (A1) of the second H-bridge circuit (120),
- at least one third switching module (SM3) is connected between the second capacitor terminal (K2) and the second output terminal (A2) of the first H-bridge circuit (110) and
- at least one fourth switching module (SM4) is connected between the second capacitor terminal (K2) and the second output terminal (A2) of the second H-bridge circuit (120).

2. Direct current transmission system (5), **characterized in that** said direct current transmission system has at least one longitudinal voltage source (100, 101) according to Claim 1.

3. Direct current transmission system (5) according to Claim 2, **characterized in that**
- the direct current transmission system (5) has a section comprising at least two direct current lines (10, 20) connected in parallel,
- the longitudinal voltage source (100, 101) is switched into the first of the two direct current lines (10) by way of the two center terminals (M1, M2) of the first H-bridge circuit (110) and can switch the capacitor (C) into the first direct current line (10), and
- the longitudinal voltage source (100, 101) is switched into the second of the two direct current lines (20) by way of the two center terminals (M1, M2) of the second H-bridge circuit (120) and can connect the capacitor (C) into the second direct current line (20).

4. Direct current transmission system (5) according to one of the preceding Claims 2 to 3, **characterized in that** the longitudinal voltage source (100, 101) makes at least two switching states possible, namely:
- a first switching state, in which the current flowing through the first direct current line (10) flows through the first H-bridge circuit (110), the switched-on first switching module (SM1), the capacitor (C) and the switched-on third switching module (SM3) and in which the current flowing through the second direct current line (20) alone flows through the second H-bridge circuit (120) and is isolated from the capacitor (C) and the first H-bridge circuit (110) by the switched-off second and/or fourth switching module (SM2, SM4), and
- a second switching state, in which the current flowing through the second direct current line (20) flows through the second H-bridge circuit (120), the switched-on second switching module (SM2), the capacitor (C) and the switched-on fourth switching module (SM4) and in which the current flowing through the first direct current line (10) alone flows through the first H-bridge circuit (110) and is isolated from the capacitor (C) and the first H-bridge circuit (110) by the switched-off first and/or third switching module (SM1, SM3).

5. Direct current transmission system (5) according to Claim 4, **characterized in that** the longitudinal voltage source (100, 101) makes two further switching states possible, namely
- a third switching state, which corresponds to the first switching state with the difference that the current flow direction of the current through the capacitor (C) is opposite to the current flow direction in the first switching state, and
- a fourth switching state, which corresponds to the second switching state with the difference that the current flow direction of the current through the capacitor (C) is opposite to the current flow direction in the second switching state.

6. Direct current transmission system (5) according to one of the preceding Claims 2 to 5, **characterized in that**
- the direct current transmission system (5) has a longitudinal voltage source cascade (300) comprising at least two longitudinal voltage sources (100, 101) according to claim 1,
- wherein the at least two longitudinal voltage sources (100, 101) form a first H-bridge series circuit in the first direct current line (10) by way of their first H-bridge circuits (110) and a second H-bridge series circuit in the second direct current line (20) by way of their second H-bridge circuits (120).

7. Direct current transmission system (5) according to one of the preceding Claims 2 to 6, **characterized in that**
- the two direct current lines (10, 20) connected in parallel are connected directly to a first node (KP1) by way of one of their conductor ends and are connected directly to a second node (KP2) by way of their respectively other conductor end and
- the longitudinal voltage source cascade (300) is connected to the two direct current lines (10, 20) in the region of the first node (KP1), at least in a tighter manner at the first node (KP1) than at the second node (KP2).

8. Direct current transmission system (5) according to one of the preceding Claims 2 to 7, **characterized in that** the dielectric strength of the switching modules (SM1-SM4) of the longitudinal voltage sources (100, 101) of the longitudinal voltage source cascade (300) increases in each case by the cutoff voltage of the capacitor (C) of the longitudinal voltage sources (100, 101) in the direction from the first node (KP1) to the second node (KP2) - from longitudinal voltage source (100, 101) to longitudinal voltage source (100, 101) .

9. Direct current transmission system (5) according to one of the preceding Claims 2 to 8, **characterized in that**, in the longitudinal voltage sources (100, 101) of the longitudinal voltage source cascade (300), the number of first, second, third and fourth switching modules (SM1-SM4) increases in each case by one switching module - as seen in the direction from the first node (KP1) to the second node (KP2) and from longitudinal voltage source (100, 101) to longitudinal voltage source (100, 101).

10. Direct current transmission system (5) according to one of the preceding Claims 2 to 9, **characterized in that** the switching modules (SM1-SM4) of the longitudinal voltage sources (100, 101) of the longitudinal voltage source cascade (300) are of identical design.

11. Direct current transmission system (5) according to one of the preceding Claims 2 to 10, **characterized in that** the switching modules (SM1-SM4) of the longitudinal voltage sources (100, 101) are semiconductor switching modules that are capable of switching and blocking in bidirectional fashion.

12. Direct current transmission system (5) according to one of the preceding Claims 2 to 11, **characterized in that** the switching modules (SM1-SM4) of the longitudinal voltage sources (100, 101) of the longitudinal voltage source cascade (300) are each formed by two transistor modules (510, 520) that are interconnected in series in inverse fashion or with opposing polarity, in particular insulated-gate bipolar transistors (530) having an antiparallel diode (540).

13. Longitudinal voltage source cascade (300), **characterized in that** it has at least two longitudinal voltage sources (100, 101) according to Claim 1.

14. Longitudinal voltage source cascade (300) according to Claim 13, **characterized in that** the at least two longitudinal voltage sources (100, 101) form, by way of the center terminals (M1, M2) of the first H-bridge circuits (110), a first H-bridge series circuit that can be switched into the first line and, by way of the center terminals (M1, M2) of the second H-bridge circuits (120), a second H-bridge series circuit that can be switched into the second line.

15. Longitudinal voltage source cascade (300) according to Claim 13 or 14, **characterized in that** the dielectric strength of the switching modules (SM1-SM4) of the longitudinal voltage sources (100, 101) of the longitudinal voltage source cascade (300) increases in each case by the cutoff voltage of the capacitor (C) of the longitudinal voltage sources (100, 101) in the longitudinal direction of the cascade - from longitudinal voltage source (100, 101) to longitudinal voltage source (100, 101).

## Revendications

1. Source (100, 101) de tension longitudinale pour l'insertion dans une première ligne et dans une deuxième ligne et pour l'injection de, respectivement, une tension (Ua, Ub) longitudinale dans chacune des deux lignes, la source (100, 101) de tension longitudinale comprenant :
- un premier montage (110) an pont en H, qui comprend quatre interrupteurs (S1 à S4) et qui a une première borne (A1) extérieure de sortie, une deuxième borne (A2) extérieure de sortie et deux bornes (M1, M2) médianes, les bornes (M1, M2) médianes pouvant, en un point coupé de la première ligne, être connectées à celle-ci, le point coupé de la première ligne ayant un premier bout de ligne et un second bout de ligne et une première des deux bornes (M1) médianes pouvant être connectée au premier bout de ligne et une deuxième des deux bornes (M2) médianes au deuxième bout de ligne,
- un deuxième montage (120) en pont en H comprenant quatre interrupteurs (S5 à S8) et qui a une première borne (A1) extérieure de sortie, une deuxième borne (A2) extérieure de sortie et deux bornes (M1, M2) médianes, les bornes (M1, M2) médianes pouvant, en un point coupé de la première ligne, être connectées à celle-ci, le point coupé de la première ligne ayant un premier bout de ligne et un second bout de ligne et une première des deux bornes (M1) médianes pouvant être connectée au premier bout de ligne et une deuxième des deux bornes (M2) médianes au deuxième bout de ligne et
- un condensateur (C), dont la première borne (K1) de condensateur est en liaison avec les deux premières bornes (A1) de sortie des deux montages (110, 120) en pont en H et dont la deuxième borne (K2) de condensateur est en liaison avec les deux deuxièmes bornes (A2) de sortie des deux montages (110, 120) en pont en H,
**caractérisée** en que
- entre la première borne (K1) du condensateur et la première borne (A1) de sortie du premier montage (110) en pont en H est monté au moins un premier module (SM1) d'interruption,
- entre la première borne (K1) du condensateur et la première borne (A1) de sortie du deuxième montage (120) en pont en H est monté au moins un deuxième module (SM2) d'interruption,
- entre la deuxième borne (K2) du condensateur et la deuxième borne (A2) de sortie du premier montage (110) en pont en H est monté au moins un troisième module (SM3) de d'interruption et
- entre la deuxième borne (K2) du condensateur et la deuxième borne (A2) de sortie du deuxième montage (120) en pont en H est monté au moins un quatrième module (SM4) de d'interruption.

2. Système (5) de transport de courant continu,
**caractérisé en ce qu'**
il a au moins une source (100, 101) de tension longitudinale suivant la revendication 1.

3. Système (5) de transport de courant continu suivant la revendication 2,
**caractérisé en ce que**
- le système (5) de transport de courant continu a une partie ayant au moins deux lignes (10, 20) de courant continu montées en parallèle,
- la source (100, 101) de tension longitudinale est, par les deux bornes (M1, M2) médianes du premier montage (110) en pont en H, montée dans la première des deux lignes (10, 20) de courant continu et peut monter le condensateur (C) dans la première ligne (10) de courant continu et
- la source (100, 101) de tension longitudinale est, par les deux bornes (M1, M2) médianes du deuxième montage (120) en pont en H, montée dans la deuxième des deux lignes (20) de courant continu et peut monter le condensateur (C) dans la deuxième ligne (20) de courant continu.

4. Système (5) de transport de courant continu suivant l'une des revendications 2 à 3 précédentes,
**caractérisé en ce que**
la source (100, 101) de tension longitudinale rend possible au moins deux états de commutation, à savoir
- un premier état de commutation, dans lequel le courant passant dans la première ligne (10) de courant continu, passe dans le premier montage (110) en pont en H, dans le premier module (SM1) d'interruption fermé, dans le condensateur (C) et dans le troisième module (SM3) d'interruption fermé et dans lequel le courant passant par la deuxième ligne (20) de courant continu passe seulement dans le deuxième montage (120) en pont en H et est, par le deuxième et/ou le quatrième module (SM2, SM4) d'interruption ouvert, séparé du condensateur (C) et du premier montage (110) en pont en H et
- un deuxième état de commutation, dans lequel le courant passant dans la deuxième ligne (20) de courant continu, passe dans le deuxième montage (120) en pont en H, dans le deuxième module (SM2) d'interruption fermé, dans le condensateur (C) et dans le quatrième module (SM4) d'interruption fermé et dans lequel le courant passant dans la première ligne (10) de courant continu passe seulement dans le premier montage (110) en pont en H et, par le premier et/ou le troisième module (SM1, SM3) d'interruption fermé, est séparé du condensateur (C) et du premier montage (110) en pont en H.

5. Système (5) de transport de courant continu suivant la revendication 4,
**caractérisé en ce que**
la source (100, 101) de tension longitudinale rend possible deux autres états de commutation, à savoir
- un troisième état de commutation, qui correspond au premier état de commutation à la différence que le sens de passage du courant dans le condensateur (C) est contraire au sens de passage du courant dans le premier état de commutation et
- un quatrième état de commutation, qui correspond au deuxième état de commutation à la différence que le sens de passage du courant dans le condensateur (C) est contraire au sens de passage du courant dans le deuxième état de commutation.

6. Système (5) de transport de courant continu suivant l'une des revendications 2 à 5 précédentes,
**caractérisé en ce que**
- le système (5) de transport de courant continu comporte une cascade (300) de sources de tension longitudinale ayant au moins deux sources (100, 101) de tension longitudinale suivant la revendication 1,
- dans lequel les au moins deux sources (100, 101) de tension longitudinale forment, par leurs premiers montages (110) en pont en H, un premier montage série en pont en H dans la première ligne (10) de courant continu et par leurs deuxièmes montages (120) en pont en H, un deuxième montage série en pont en H dans la deuxième ligne (20) de courant continu.

7. Système (5) de transport de courant continu suivant l'une des revendications 2 à 6 précédentes,
**caractérisé en ce que**
- les deux lignes (10, 20) de courant continu montées en parallèle sont, par leur un bout de conducteur, connectées directement à un premier point (KP1) nodal et par leur autre bout conducteur respectif sont connectées directement à un deuxième point (KP2) nodal et
- la cascade (300) de sources de tension longitudinale est connectée dans la partie du premier point (KP1) nodal, au moins d'une manière plus intense au premier point (KP1) nodal qu'au deuxième point (KP2) nodal, aux deux lignes (10, 20) de courant continu.

8. Système (5) de transport de courant continu suivant l'une des revendications 2 à 7 précédentes,
**caractérisé en ce que**
la rigidité diélectrique des modules (SM1 à SM4 ) d'interruption des sources (100, 101) de tension longitudinale de la cascade (300) de sources de tension longitudinale augmente, respectivement, de la tension de blocage du condensateur (C) des sources (100, 101) de tension longitudinale, dans la direction allant du premier point (KP1) nodal au deuxième point (KP2) nodal d'une source (100, 101) de tension longitudinale à une source (100, 101) de tension longitudinale.

9. Système (5) de transport de courant continu suivant l'une des revendications 2 à 8 précédentes,
**caractérisé en ce que**,
pour les sources (100, 101) de tension longitudinale de la cascade (300) de sources de tension longitudinale, le nombre des premier, deuxième, troisième et quatrième modules (SM1 à SM4) d'interruption, augmente, -considéré dans la direction du premier point (KP1) nodal au deuxième point (KP2) nodal et d'une source (100, 101) de tension longitudinale à une source (100, 101) de tension longitudinale- respectivement, d'un module d'interruption.

10. Système (5) de transport de courant continu suivant l'une des revendications 2 à 9 précédentes,
**caractérisé en ce que**
les modules (SM1 à SM4) d'interruption des sources (10, 101) de tension longitudinale de la cascade (300) de sources de tension longitudinale sont pareils.

11. Système (5) de transport de courant continu suivant l'une des revendications 2 à 10 précédentes,
**caractérisé en ce que**
les modules (SM1 à SM4) d'interruption des sources (100, 101) de tension longitudinale sont des modules d'interruption à semi-conducteur, bidirectionnels, pouvant être passants et bloqués.

12. Système (5) de transport de courant continu suivant l'une des revendications 2 à 11 précédentes,
**caractérisé en ce que**
les modules (SM1 à SM4) d'interruption des sources (100, 101) de tension longitudinale de la cascade (300) de sources de tension longitudinale sont formés chacun de deux modules (510, 520) de transistor, montés en série, en inverse ou de polarités opposées, notamment par des transistors (530) bipolaires à électrode de grille isolée et à diode (540) tête-bêche.

13. Cascade (300) de sources de tension longitudinale,
**caractérisée en ce qu'**
elle a au moins deux sources (100, 101) de tension longitudinale suivant la revendication 1.

14. Cascade (300) de sources de tension longitudinale suivant la revendication 13,
**caractérisée en ce que**
les au moins deux sources (100, 101) de tension longitudinale forment, avec les bornes (M1, M2) médianes des premiers montages (110) en pont en H, un premier montage série en pont en H, qui peut être monté dans la première ligne, et, avec les bornes (M1, M2) médianes du deuxième montage (120) à pont en H, un deuxième montage série en pont en H, qui peut être monté dans la deuxième ligne.

15. Cascade (300) de sources de tension longitudinale suivant la revendication 13 ou 14,
**caractérisée en ce que**
la rigidité diélectrique des modules (SM1 à SM4) d'interruption des sources (100, 101) de tension longitudinale de la cascade (300) de sources de tension longitudinale, augmente -d'une source (10, 101) de tension longitudinale à une source (100, 101) de tension longitudinale- respectivement de la tension de blocage du condensateur (C) des sources (100, 101) de tension longitudinale, dans la direction longitudinale de la cascade, (100, 101).
